# EUROPEAN PATENT SPECIFICATION

(11) **EP 2 849 041 B1**
(45) Date of publication and mention of the grant of the patent: **04.07.2018**
(21) Application number: 13867125.0
(22) Date of filing: 23.10.2013
(51) Int. Cl.: G06F 3/048, G06F 1/32

(54) **WAKEUP METHOD AND SYSTEM FOR TOUCH TERMINAL AND TOUCH TERMINAL**
AUFWECKVERFAHREN UND SYSTEM FÜR EIN BERÜHRUNGSEMPFINDLICHES ENDGERÄT UND BERÜHRUNGSEMPFINDLICHES ENDGERÄT
PROCÉDÉ DE RÉVEIL ET SYSTÈME POUR TERMINAL TACTILE ET TERMINAL TACTILE

(30) Priority: 28.12.2012 CN 201210586063
(43) Date of publication of application: 18.03.2015
(73) Proprietor: Shenzhen Goodix Technology Co., Ltd., Futian Free Trade Zone Shenzhen, Guangdong 518000 (CN)
(72) Inventor: DENG, Gengchun, Shenzhen Guangdong 518000 (CN)
(74) Representative: Romano, Giuseppe
(86) International application number: PCT/CN2013/085831
(87) International publication number: WO 2014/101555

(56) References cited:
- CN-A- 1 864 125
- CN-A- 101 702 106
- CN-A- 101 702 106
- CN-A- 102 043 536
- CN-A- 103 019 796
- US-A1- 2005 078 093
- US-A1- 2012 154 292

## Description

### FIELD

The present disclosure relates to a touch technique field, and more particularly relates to a wakeup method and system for a touch terminal and a touch terminal.

### BACKGROUND

By providing convenient human-computer interaction methods, touch screen technologies are welcomed by consumers, thus being increasingly applied in various electrical products.

In order to save power, an existing electrical product using a touch screen would close the touch screen when the product is in a standby state, i.e. detections of touch actions from users are terminated. To use the touch screen, users should unlock it after the system of the product is wakened using a mechanical button. With the mechanical button, the appearance of the product is affected and the service life of the product is affected since the mechanical button is fragile.

US 2005/078093 A1 discloses the follow technical solution. Bending wave vibrations propagating in a substrate of a touch input device are sensed. Provision is made for discriminating between sensed vibrations propagating in the substrate indicative of an intended touch and sensed vibrations propagating in the substrate indicative of an unintended touch. In response to the sensed vibrations propagating in the substrate indicative of the intended touch, a wake-up signal is generated. The wake-up signal is communicated to a control system of the touch input device for transitioning the control system from a sleep state to an operational state.

### SUMMARY

A wakeup method and system for a touch terminal and a touch terminal according to embodiments of the present disclosure is aimed to solve the problem of the need for a mechanical button to implement wakeup of the system of the touch terminal in the related art.

The technical solutions of the present disclosure are as follows.

A wakeup method for a touch terminal comprises the following steps: step A: scanning a touch screen in a standby state, determining whether a vibration signal satisfying a predetermined characteristic condition and used for prompting a wakeup of the touch terminal is detected at the
same time when a touch action is detected to be present on the touch screen; step B: if the vibration signal satisfying the predetermined characteristic condition and used for prompting wakeup of the touch terminal is detected at the same time, then waking the touch terminal up.

A wakeup system for a touch terminal comprises a touch action detection module configured for detecting whether a touch action is present on the touch screen; a vibration signal detection module configured for detecting and recording a vibration signal; a wakeup module configured for determining whether a vibration signal satisfying a predetermined characteristic condition and used for prompting a wakeup of the touch terminal is detected by the vibration signal detection module at the same time when the touch action is detected to be present on the touch screen by the touch action detection module, if yes, waking the touch terminal up.

A touch terminal comprises the above-described wakeup system for the touch terminal.

The beneficial effects of the present disclosure are as follows. According to embodiments of the present disclosure, by scanning a touch screen in a standby state when a touch action is detected to be present on the touch screen and a vibration signal satisfying a predetermined characteristic condition and used for prompting wakeup of the touch terminal is detected at the same time, i.e. a touch action generating the vibration signal is detected to be present on the touch screen, the touch terminal is wakened. The wakeup of the touch terminal may be implemented without a mechanical button provided on the touch terminal, thus not affecting the service life of the touch terminal and allowing the appearance of the touch terminal to be more beautiful.

### BRIEF DESCRIPTION OF THE DRAWINGS

Fig. 1 is a flow chart of a wakeup method for a touch terminal according to a first embodiment of the present disclosure;
Fig. 2 is a diagram of an operation of clicking a panel according to an embodiment of the present disclosure;
Fig. 3 is a schematic diagram of a wakeup system for a touch terminal according to a second embodiment of the present disclosure.

### DETAILED DESCRIPTION

To explain the objective, technical solutions and the advantages of the present disclosure better, reference will be made in detail to drawings and embodiments of the present disclosure. The embodiments described herein are explanatory, illustrative, and used to generally understand the present disclosure. It should be understood that the embodiments shall not be construed to limit the present disclosure.

According to embodiments of the present disclosure, by scanning a touch screen in a standby state, when a touch action is detected to be present on the touch screen and a vibration signal satisfying a predetermined characteristic condition and used for prompting the wakeup of the touch terminal is detected at the same time, i.e. a touch action generating the vibration signal is detected to be present on the touch screen, the touch terminal is wakened. The wakeup of the touch terminal is implemented without a mechanical button provided on the touch terminal, thus not affecting the service life of the touch terminal and allowing the appearance of the touch terminal to be more beautiful.

### EMBODIMENT 1

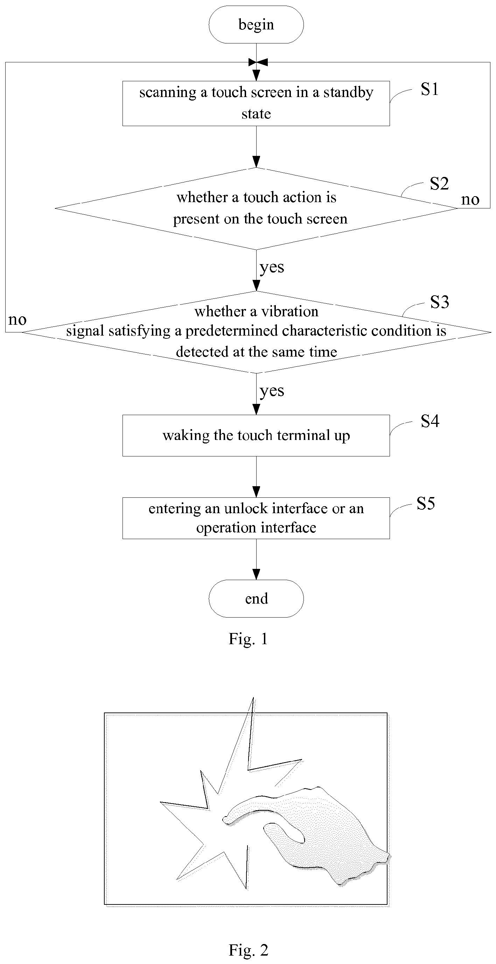

A wakeup method for a touch mobile is provided according to the first embodiment of the present disclosure. As shown in Fig. 1, the method comprises the following steps.

At step S1: a touch screen is scanned in a standby state.

In this embodiment, the touch screen is scanned under a wakeup scanning frequency in the standby state, in which the wakeup scanning frequency may be a lower frequency such that the effect of power and energy saving is achieved and the wakeup of the touch terminal with low power consumption may be implemented. Thus, in this embodiment, a scanning frequency lower than the scanning frequency in a normal operation state of the touch terminal is used as the wakeup scanning frequency.

At step S2: whether a touch action is present on the touch screen is determined, and if yes, step S3 is followed to conduct further determination, or else, step S1 is followed to scan the touch screen.

When it is detected that sampled signals on the touch screen are changed, the touch action is detected to be present on the touch screen.

At step S3: whether a vibration signal satisfying a predetermined characteristic condition is detected at the same time is determined, if yes, step S4 is followed, or else, step S1 is followed to scan the touch screen.

In this embodiment, when the touch action is detected to be present on the touch screen, it is further determined whether a vibration signal satisfying a predetermined characteristic condition and used for prompting the wakeup of the touch terminal is detected at the same time. The vibration signal used for prompting the wakeup of the touch terminal may be defined as a signal generated by various particular touch actions, and in this embodiment, the particular touch actions may be defined as an action of single-clicking or double-clicking the touch screen. Therefore, when a user single-clicks or double-clicks the touch screen, a touch action can be detected, in other words, if a user single-clicks or double-clicks the touch screen, when a touch action is detected, a vibration signal used for prompting the wakeup of the touch terminal is detected at the same time, and if the vibration signal satisfies the predetermined characteristic condition, the wakeup of the touch terminal is performed.

More specifically, whether the vibration signal satisfying the predetermined characteristic condition is detected at the same time can be determined by the following steps.

At step A1: when the touch action is detected to be present on the touch screen, whether a vibration signal satisfying a predetermined intensity condition is present at the same time is determined.

At step A2: if the vibration signal satisfying the predetermined intensity condition is present at the same time, whether the comparison of characteristic parameters of the vibration signal and that of a reference vibration signal satisfies a predetermined similarity or correlation coefficient threshold condition is determined.

At step A3: if the comparison of characteristic parameters of the vibration signal and that of the reference vibration signal satisfies the predetermined similarity or correlation coefficient threshold condition, it is determined that the vibration signal satisfying the predetermined characteristic condition and used for prompting the wakeup of the touch terminal is detected at the same time.

As mentioned above, referring to Fig. 2, when the touch screen is touched by a finger by clicking, a vibration signal of the body of the terminal is detected by the touch terminal. Since the analysis of recorded vibration waveforms is complicated, a simple characteristic-signal intensity-is detected first. There are many ways to detect the signal intensity and one simple way of them is as follows.

At step A11: when a touch action is detected to be present on the touch screen, whether a vibration signal is present at the same time is determined.

At step A12: if the vibration signal is present at the same time, the number of sampling points where a waveform of the vibration signal exceeds a predetermined amplitude threshold is calculated.

At step A13: if the number of sampling points is greater than a predetermined maximum to indicate the intensity of the vibration signal satisfies the predetermined intensity condition, it is determined that when the touch action is detected to be present on the touch screen the vibration signal satisfying the predetermined intensity condition is present at the same time.

In order to improve dependability, a further detection is needed to detect the characteristic parameters other than the amplitude of the vibration signal satisfying the predetermined intensity condition. A vibration signal caused by clicking the touch screen by a finger is the signal needed to be determined. Besides requiring the intensity of the signal satisfying the predetermined characteristic condition, frequency domain parameters (such as descriptive parameters relevant to spectral distributions of the signal) and time domain parameters (such as descriptive parameters relevant to envelope shapes of a signal amplitude) of the signal are calculated with an algorithm similar to the speech recognition to obtain characteristic parameters of the current vibration signal by comparing the waveform of the current vibration signal with the waveform of a pre-sampled and stored reference vibration signal, and the characteristic parameters of the current vibration signal is compared to that of the reference vibration signal to obtain the similarity or the correlation coefficient between the two signals, which is then compared with a predetermined similarity or correlation coefficient threshold condition to determine whether the similarity or the correlation coefficient between the two signals meets a qualification. If the similarity or the correlation coefficient between the two signals meets the qualification, for example, the similarity or the correlation coefficient between the two signals is greater than a predetermined value, the conclusion is drawn that a dependable qualified vibration signal is detected.

At step S4: the touch terminal is wakened.

In step S3, if the vibration signal satisfying the predetermined characteristic condition is detected at the same time when the touch action is detected to be present on the touch screen, the touch terminal is wakened. In this embodiment, besides wakening the touch terminal, the scanning frequency is adjusted to the scanning frequency in the normal operation state of the touch terminal such that the touch screen may be scanned in the normal operation state by the touch terminal.

Step S5: an unlock interface or an operation interface is entered.

In this embodiment, the unlock interface is an interface on which an unlock password is inputted by a user to conduct screen operations. In other embodiments, according to customized settings by a user, in this step, the operation interface is entered which is an interface on which the screen operations are directly conducted by the user. The way of entering the unlock interface is safer than the way of entering the operation interface, however, the operations of users are more complex.

It can be understood that all or part of the steps in the method of the above embodiments can be implemented by instructing related hardware via programs, the program may be stored in a computer readable storage medium, and the storage medium may be ROM (read-only memories)/RAM (random access memories), magnetic disks, or optical disks.

According to embodiments of the present disclosure, by scanning a touch screen in a standby state, when a touch action is detected to be present on the touch screen and a vibration signal satisfying a predetermined characteristic condition and used for prompting the wakeup of the touch terminal is detected at the same time, i.e. a touch action generating the vibration signal is detected to be present on the touch screen, the touch terminal is wakened. Therefore, the wakeup of the touch terminal is implemented without a mechanical button provided on the touch terminal, thus not affecting the service life of the touch terminal and allowing the appearance of the touch terminal to be more beautiful. Furthermore, by using a scanning frequency lower than the scanning frequency in the normal operation state of the touch terminal as the wakeup scanning frequency, the effect of power and energy saving is achieved and the wakeup of the touch terminal with low power consumption may be implemented.

### EMBODIMENT 2

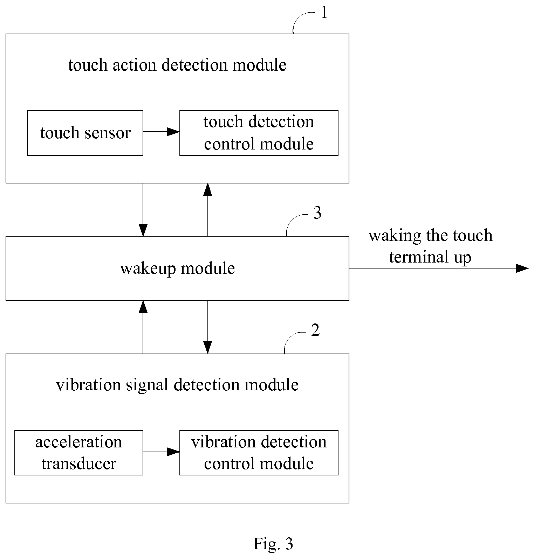

A wakeup system for a touch terminal is provided according to the second embodiment of the present disclosure. As shown in Fig. 3, to make it easier to explain, only the modules related to embodiments of the present disclosure are illustrated in Fig. 3. All or part of modules of the wakeup system may be arranged in a touch screen driver IC. The system in this embodiment may use the method in the first embodiment, and thus concerning the operational principle and technical details, reference is made to the description of the first embodiment, which is not described herein again.

Referring to Fig. 3, the wakeup system for the touch terminal comprises a touch action detection module 1, a vibration signal detection module 2 and a wakeup module 3. The touch action detection module 1 is configured for detecting whether a touch action is present on the touch screen, more specifically, by using a touch sensor in a matrix form and a touch detection control module to implement the detection. As shown in Fig. 3, the touch sensor is connected to the touch detection control module. The vibration signal detection module 2 is configured for detecting and recording a vibration signal, more specifically, for detecting whether a vibration signal satisfying a predetermined characteristic condition and used for prompting the wakeup of the touch terminal is present and recording the vibration signal. The detection principles are as described above. The wakeup module 3 is configured for determining whether a vibration signal satisfying a predetermined characteristic condition and used for prompting the wakeup of the touch terminal is detected by the vibration signal detection module 2 at the same time when the touch action is detected to be present on the touch screen by the touch action detection module 1, if yes, waking the touch terminal up.

As described in the first embodiment, the action generating the vibration signal used for prompting the wakeup of the touch terminal is a touch action of single-clicking or double-clicking the touch screen. Due to the touch action, a vibration of the body of the touch terminal is detected by the touch terminal in which an acceleration transducer is mounted. The vibration signal detection module 2 comprises an acceleration transducer and a vibration detection control module, in which the acceleration transducer is mounted in the touch terminal. The specific location of the acceleration transducer is not limited, as long as the vibration of the touch terminal can be detected by the acceleration transducer. The vibration detection control module is connected to the acceleration transducer, and configured for determining whether the vibration signal satisfying the predetermined characteristic condition and used for prompting the wakeup of the touch terminal is detected at the same time when the touch action is detected to be present on the touch screen.

In this embodiment, the touch action detection module 1 and the vibration signal detection module 2 may scan the touch screen under the wakeup scanning frequency in the standby state, in which the wakeup scanning frequency may be a lower frequency such that the effect of power and energy saving is achieved and the wakeup of the touch terminal with low power consumption may be implemented. Thus, in this embodiment, a scanning frequency lower than the scanning frequency in a normal operation state of the touch terminal is used as the wakeup scanning frequency. When the touch action is detected to be present on the touch screen and the vibration signal satisfying the predetermined characteristic condition and used for prompting the wakeup of the touch terminal is detected at the same time by the wakeup module 3, besides wakening the touch terminal, the scanning frequency is adjusted to the scanning frequency in the normal operation state of the touch terminal such that the touch screen may be scanned in the normal operation state by the touch terminal.

The above wakeup system may be applied in various touch terminals, such as a touch screen phone, a touch panel, a multimedia terminal with a touch screen and a self-help smart terminal and so on. In a touch terminal using the wakeup system according to embodiments of the present disclosure, the wakeup of the screen of the touch terminal can be implemented without a mechanical button provided on the touch terminal, thus not affecting the service life of the touch terminal and allowing the appearance of the touch terminal to be more beautiful.

### EMBODIMENT 3

A touch terminal is provided according to the third embodiment of the present disclosure, in which the wakeup system provided in the second embodiment is arranged in the touch terminal. The specific operation principle is as described above, which is not described herein again.

The touch terminal provided in this embodiment may implement the wakeup of the touch screen without a mechanical button provided on the touch terminal, thus not affecting the service life of the touch terminal and allowing the appearance of the touch terminal to be more beautiful.

Although explanatory embodiments have been shown and described, it would be appreciated by those skilled in the art that the above embodiments cannot be construed to limit the present disclosure, and changes, alternatives, and modifications can be made in the embodiments without departing from the principles of the invention as defined in the appended claims.

## Claims

1. A wakeup method for a touch terminal, **characterized in that** the wakeup method for the touch terminal comprises:
step A: scanning a touch screen in a standby state, determining whether a vibration signal satisfying a predetermined characteristic condition and used for prompting a wakeup of the touch terminal is detected at the same time when a touch action is detected to be present on the touch screen;
step B: if the vibration signal satisfying the predetermined characteristic condition and used for prompting the wakeup of the touch terminal is detected at the same time, then waking the touch terminal up.

2. The wakeup method according to claim 1, after step B, further comprising:
step C: entering an unlock interface or an operation interface;
wherein the unlock interface is an interface on which an unlock password is inputted by a user to conduct screen operations, and the operation interface is an interface on which the screen operations are directly conducted by the user.

3. The wakeup method according to claim 1 or 2, wherein
in step A, scanning the touch screen under a wakeup scanning frequency in the standby state;
in step B, when waking the touch terminal up, adjusting the wakeup scanning frequency to a scanning frequency in a normal operation state,
in which the wakeup scanning frequency is lower than the scanning frequency in the normal operation state.

4. The wakeup method according to claim 1 or 2, wherein
in step A, the vibration signal used for prompting the wakeup of the touch terminal is a vibration signal generated by single-clicking or double-clicking the touch screen.

5. The wakeup method according to claim 4, wherein
in step A, the step of determining whether the vibration signal satisfying a predetermined characteristic condition and used for prompting the wakeup of the touch terminal is detected at the same time comprises:
step A1: determining whether a vibration signal satisfying a predetermined intensity condition is present at the same time when the touch action is detected to be present on the touch screen;
step A2: if yes, determining whether a comparison of characteristic parameters of the vibration signal and that of a reference vibration signal satisfies a predetermined similarity or correlation coefficient threshold condition;
step A3: if yes, determining that the vibration signal satisfying the predetermined characteristic condition and used for prompting the wakeup of the touch terminal is detected at the same time.

6. The wakeup method according to claim 5, wherein step A1 comprises:
Step A11: determining whether a vibration signal is present at the same time when the touch action is detected to be present on the touch screen;
Step A12: if yes, calculating a number of sampling points where a waveform of the vibration signal exceeds a predetermined amplitude threshold;
Step A13: if the number of sampling points is greater than a predetermined maximum to indicate an intensity of the vibration signal satisfies the predetermined intensity condition, determining that the vibration signal satisfying the predetermined intensity condition is present at the same time when the touch action is detected to be present on the touch screen.

7. The wakeup method according to claim 5, wherein the characteristic parameters of the vibration signal comprises frequency domain parameters and time domain parameters.

8. A wakeup system for a touch terminal, **characterized in that** the wakeup system for the touch terminal comprises:
a touch action detection module (1) configured for detecting whether a touch action is present on the touch screen;
a vibration signal detection module (2) configured for detecting and recording a vibration signal;
a wakeup module (3) configured for determining whether a vibration signal satisfying a predetermined characteristic condition and used for prompting a wakeup of the touch terminal is detected by the vibration signal detection module (2) at the same time when the touch action is detected to be present on the touch screen by the touch action detection module (1), if yes, waking the touch terminal up.

9. The wakeup system according to claim 8, wherein the vibration signal used for prompting the wakeup of the touch terminal is a vibration signal generated by single-clicking or double-clicking the touch screen.

10. The wakeup system according to claim 9, wherein the vibration signal detection module (2) comprises:
an acceleration transducer mounted in the touch terminal and configured for detecting the vibration signal;
a vibration detection control module connected to the acceleration transducer and configured for determining whether the vibration signal satisfying the predetermined characteristic condition and used for prompting the wakeup of the touch terminal is detected at the same time when the touch action is detected to be present on the touch screen.

11. A touch terminal, comprising a wakeup system for a touch terminal according to any of claims 8-10.

## Patentansprüche

1. Aufweckverfahren für ein Touch-Endgerät, **dadurch gekennzeichnet, dass** das Aufweckverfahren für das Touch-Endgerät umfasst:
Schritt A: Scannen eines Touch-Bildschirms in einem Standby-Zustand, wobei bestimmt wird, ob ein Vibrationssignal, das eine vorbestimmte charakteristische Bedingung befriedigt und zum Veranlassen eines Aufweckens des Touch-Endgerätes genutzt wird, gleichzeitig erfasst wird, wenn eine Touch-Handlung als anwesend auf dem Touch-Bildschirm erfasst wird;
Schritt B: wenn das Vibrationssignal, das die vorbestimmte charakteristische Bedingung befriedigt und zum Veranlassen des Aufweckens des Touch-Endgerätes genutzt wird, gleichzeitig erfasst wird, Aufwecken des Touch-Endgeräts.

2. Aufweckverfahren nach Anspruch 1, das nach Schritt B weiterhin umfasst:
Schritt C: Eintreten in eine Entriegelungsschnittstelle oder eine Betriebsschnittstelle;
wobei die Entriegelungsschnittstelle eine Schnittstelle ist, in die ein Entriegelungspasswort von einem Nutzer eingegeben wird, um Bildschirmoperationen auszuführen, und die Betriebsschnittstelle eine Schnittstelle ist, in die Bildschirmoperationen direkt von dem Nutzer ausgeführt werden können.

3. Aufweckverfahren nach Anspruch 1 oder 2, wobei
in Schritt A ein Scannen des Touch-Bildschirms bei einer Aufweckscanfrequenz in dem Standby-Zustand erfolgt;
in Schritt B, wenn das Touch-Endgerät aufgeweckt wird, die Aufweckscanfrequenz auf eine Scanfrequenz in einem normalen Betriebszustand eingestellt wird,
wobei die Aufweckscanfrequenz niedriger als die Scanfrequenz in dem normalen Betriebszustand ist.

4. Aufweckverfahren nach Anspruch 1 oder 2, wobei
in Schritt A das Vibrationssignal, das zum Veranlassen des Aufweckens des Touch-Endgeräts genutzt wird, ein Vibrationssignal ist, das durch einfaches Klicken oder doppeltes Klicken des Touch-Bildschirms erzeugt wird.

5. Aufweckverfahren nach Anspruch 4, wobei
in Schritt A der Schritt zum Bestimmen, ob das Vibrationssignal, das eine vorbestimmte charakteristische Bedingung befriedigt und zum Veranlassen des Aufweckens des Touch-Endgeräts genutzt wird, gleichzeitig erfasst wird, umfasst:
Schritt A1: Bestimmen, ob ein Vibrationssignal, das eine vorbestimmte Intensitätsbedingung befriedigt, gleichzeitig vorliegt, wenn erfasst wird, dass die Touch-Handlung auf dem Touch-Bildschirm vorliegt;
Schritt A2: wenn ja, Bestimmen, ob ein Vergleich charakteristischer Parameter des Vibrationssignals und jene eines Bezugsvibrationssignals eine vorbestimmte Ähnlichkeit oder eine Korrelationskoeffizientenschwellenbedingung erfüllt;
Schritt A3: wenn ja, Bestimmen, dass das Vibrationssignal, das die vorbestimmte charakteristische Bedingung befriedigt und zum Veranlassen des Aufweckens des Touch-Endgerätes genutzt wird, gleichzeitig erfasst wird.

6. Aufweckverfahren nach Anspruch 5, wobei Schritt A1 umfasst:
Schritt A11: Bestimmen, ob ein Vibrationssignal gleichzeitig vorliegt, wenn die Touch-Handlung als auf dem Touch-Bildschirm vorliegend erfasst wird;
Schritt A12: wenn ja, Berechnen einer Anzahl von Abtastpunkten, wo eine Wellenform des Vibrationssignals eine vorbestimmte Amplitudenschwelle überschreitet;
Schritt A13: wenn die Anzahl von Abtastpunkten größer als ein vorbestimmtes Maximum ist, um anzuzeigen, dass eine Intensität des Vibrationssignals die vorbestimmte Intensitätsbedingung befriedigt, Bestimmen, dass das Vibrationssignal, das die vorbestimmte Intensitätsbedingung befriedigt, gleichzeitig vorliegt, wenn erfasst wird, dass die Touch-Handlung auf dem Touch-Bildschirm vorliegt.

7. Aufweckverfahren nach Anspruch 5, wobei die charakteristischen Parameter des Vibrationssignals Frequenzdomänenparameter und Zeitdomänenparameter umfassen.

8. Aufwecksystem für ein Touch-Endgerät, **dadurch gekennzeichnet, dass** das Aufwecksystem für das Touch-Endgerät umfasst:
ein Touch-Handlungs-Erfassungsmodul (1), das konfiguriert ist, um zu erfassen, ob eine Touch-Handlung auf dem Touch-Bildschirm vorliegt;
ein Vibrationssignalerfassungsmodul (2) das konfiguriert ist, um ein Vibrationssignal zu erfassen und aufzuzeichnen;
ein Aufweckmodul (3), das konfiguriert ist, um zu bestimmen, ob ein Vibrationssignal, das eine vorbestimmte charakteristische Bedingung befriedigt und zum Veranlassen eines Aufweckens des Touch-Endgeräts genutzt wird, durch das Vibrationssignalerfassungsmodul (2) gleichzeitig erfasst wird, wenn durch das Touch-Handlungs-Erfassungsmodul (1) erfasst wird, dass die Touch-Handlung auf dem Touchscreen als vorliegend erfasst wird, wenn ja, Aufwecken des Touch-Endgeräts.

9. Aufwecksystem nach Anspruch 8, wobei das Vibrationssignal, das zum Veranlassen des Aufweckens des Touch-Endgerätes genutzt wird, ein Vibrationssignal ist, das durch einfaches Klicken oder doppeltes Klicken des Touch-Bildschirms erzeugt wird.

10. Aufwecksystem nach Anspruch 9, wobei das Vibrationssignalerfassungsmodul (2) umfasst:
einen Beschleunigungs-Transducer, der in dem Touch-Endgerät montiert ist und konfiguriert ist, um das Vibrationssignal zu erfassen;
ein Vibrationserfassungssteuermodul, das mit dem Beschleunigungs-Transducer verbunden ist und konfiguriert ist, um zu bestimmen, ob das Vibrationssignal, das die vorbestimmte charakteristische Bedingung befriedigt und zum Veranlassen des Aufweckens des Touch-Geräts genutzt wird, gleichzeitig erfasst wird, wenn erfasst wird, dass die Touch-Handlung auf dem Touch-Bildschirm vorliegt.

11. Touch-Endgerät, das ein Aufwecksystem für ein Touch-Endgerät nach einem der Ansprüche 8 bis 10 umfasst.

## Revendications

1. Procédé de sortie de veille destiné à un terminal tactile, **caractérisé en ce que** le procédé de sortie de veille destiné au terminal tactile comprend :
étape A : le balayage d'un écran tactile en état de veille, en déterminant si un signal de vibration qui satisfait une condition caractéristique prédéterminée et qui est utilisé pour déclencher une sortie de veille du terminal tactile est détecté ou non au moment où la présence d'une action tactile est détectée sur l'écran tactile ;
étape B : si le signal de vibration qui satisfait la condition caractéristique prédéterminée et est utilisé pour déclencher la sortie de veille du terminal tactile est détecté en même temps, alors la sortie de veille du terminal tactile a lieu.

2. Procédé de sortie de veille selon la revendication 1, après l'étape B, qui comprend en outre :
étape C : l'accès à une interface de déverrouillage ou une interface de fonctionnement ;
dans lequel l'interface de déverrouillage est une interface sur laquelle un mot de passe de déverrouillage est saisi par un utilisateur afin d'effectuer des opérations à l'écran, et l'interface de fonctionnement est une interface sur laquelle les opérations à l'écran sont directement effectuées par l'utilisateur.

3. Procédé de sortie de veille selon la revendication 1 ou 2, dans lequel
à l'étape A, le balayage de l'écran tactile à une fréquence de balayage de sortie de veille dans l'état de veille ;
à l'étape B, lors de la sortie de veille du terminal tactile, le réglage de la fréquence de balayage de sortie de veille sur une fréquence de balayage dans un état de fonctionnement normal,
dans lequel la fréquence de balayage de sortie de veille est inférieure à la fréquence de balayage dans l'état de fonctionnement normal.

4. Procédé de sortie de veille selon la revendication 1 ou 2, dans lequel
à l'étape A, le signal de vibration utilisé pour déclencher la sortie de veille du terminal tactile est un signal de vibration généré par simple clic ou double clic sur l'écran tactile.

5. Procédé de sortie de veille selon la revendication 4, dans lequel
à l'étape A, l'étape de détermination du fait que le signal de vibration qui satisfait une condition caractéristique prédéterminée et qui est utilisé pour déclencher la sortie de veille du terminal tactile soit détecté ou non en même temps comprend :
étape A1 : la détermination du fait qu'un signal de vibration qui satisfait une condition d'intensité prédéterminée soit présent ou non en même temps lorsque la présence de l'action tactile est détectée sur l'écran tactile ;
étape A2 : si oui, la détermination du fait qu'une comparaison entre les paramètres caractéristiques du signal de vibration et ceux d'un signal de vibration de référence satisfasse ou non une condition de seuil de coefficient de similarité ou de corrélation prédéterminé ;
étape A3 : si oui, la détermination du fait que le signal de vibration qui satisfait la condition caractéristique prédéterminée et qui est utilisé pour déclencher la sortie de veille du terminal tactile soit détecté en même temps.

6. Procédé de sortie de veille selon la revendication 5, dans lequel l'étape A1 comprend :
étape A11 : la détermination du fait qu'un signal de vibration soit présent ou non en même temps lorsque la présence de l'action tactile est détectée sur l'écran tactile ;
étape A12 : si oui, le calcul d'un nombre de points d'échantillonnage au niveau desquels une forme d'onde du signal de vibration dépasse un seuil d'amplitude prédéterminé ;
étape A13 : si le nombre de points d'échantillonnage est supérieur à un maximum prédéterminé afin d'indiquer qu'une intensité du signal de vibration satisfait la condition d'intensité prédéterminée, la détermination du fait que le signal de vibration qui satisfait la condition d'intensité prédéterminée soit présent en même temps lorsque la présence de l'action tactile est détectée sur l'écran tactile.

7. Procédé de sortie de veille selon la revendication 5, dans lequel les paramètres caractéristiques du signal de vibration comprennent des paramètres de domaine de fréquences et des paramètres de domaine temporel.

8. Système de sortie de veille destiné à un terminal tactile, **caractérisé en ce que** le système de sortie de veille destiné au terminal tactile comprend :
un module de détection d'action tactile (1) configuré pour détecter si une action tactile est présente ou non sur l'écran tactile ;
un module de détection de signal de vibration (2) configuré pour détecter et enregistrer un signal de vibration ;
un module de sortie de veille (3) configuré pour déterminer si un signal de vibration qui satisfait une condition caractéristique prédéterminée et est utilisé pour déclencher une sortie de veille du terminal tactile est détecté ou non par le module de détection de signal de vibration (2) en même temps lorsque la présence de l'action tactile est détectée sur l'écran tactile par le module de détection d'action tactile (1), et, si oui, la sortie de veille du terminal tactile a lieu.

9. Système de sortie de veille selon la revendication 8, dans lequel le signal de vibration utilisé pour déclencher la sortie de veille du terminal tactile est un signal de vibration généré par simple clic ou double clic sur l'écran tactile.

10. Système de sortie de veille selon la revendication 9, dans lequel le module de détection de signal de vibration (2) comprend :
un transducteur d'accélération monté dans le terminal tactile et configuré pour détecter le signal de vibration ;
un module de commande de détection de vibration relié au transducteur d'accélération et configuré pour déterminer si le signal de vibration qui satisfait la condition caractéristique prédéterminée et qui est utilisé pour déclencher la sortie de veille du terminal tactile est détecté ou non en même temps lorsque la présence de l'action tactile est détectée sur l'écran tactile.

11. Terminal tactile, qui comprend un système de sortie de veille destiné à un terminal tactile selon l'une quelconque des revendications 8 à 10.
